(19) Europäisches Patentamt
European Patent Office
Office européen des brevets

(11) **EP 2 469 868 B1**

(12) **FASCICULE DE BREVET EUROPEEN**

(45) Date de publication et mention
de la délivrance du brevet:
**17.10.2018 Bulletin 2018/42**

(21) Numéro de dépôt: **11192584.8**

(22) Date de dépôt: **08.12.2011**

(51) Int Cl.:
*H04N 13/00* (2018.01)   *G06T 5/50* (2006.01)
*H04N 13/344* (2018.01)   *H04N 13/156* (2018.01)
*H04N 13/128* (2018.01)   *G06T 7/00* (2017.01)

(54) **Procédé de correction de l'hyperstéréoscopie et système de visualisation de casque associé**

Verfahren zur Korrektur der Hyperstereoskopie, und entsprechendes Visualisierungssystem mit Helm

Method for correcting hyperstereoscopy and related helmet display system

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **23.12.2010 FR 1005074**

(43) Date de publication de la demande:
**27.06.2012 Bulletin 2012/26**

(73) Titulaire: **Thales
92400 Courbevoie (FR)**

(72) Inventeurs:
- **Francois, Jean-Michel
  33140 CADAUJAC (FR)**
- **Ellero, Sébastien
  47600 FRANCESCAS (FR)**
- **Grossetete, Matthieu
  33000 BORDEAUX (FR)**
- **Baudou, Joël
  33160 ST MEDARD EN JALLES (FR)**

(74) Mandataire: **Bréda, Jean-Marc et al
Marks & Clerk France
Conseils en Propriété Industrielle
Immeuble " Visium "
22 Avenue Aristide Briand
94117 Arcueil Cedex (FR)**

(56) Documents cités:
**US-A- 6 111 597    US-B1- 6 389 153**

- **WARREN ROBINETT: "Computational model for the stereoscopic optics of a head-mounted display", PROCEEDINGS OF SPIE, vol. 1457, 1 janvier 1991 (1991-01-01), pages 140-160, XP055002498, ISSN: 0277-786X, DOI: 10.1117/12.46303**
- **ZHENG Q ET AL: "A COMPUTATIONAL VISION APPROACH TO IMAGE REGISTRATION", IEEE TRANSACTIONS ON IMAGE PROCESSING, IEEE SERVICE CENTER, PISCATAWAY, NJ, US, vol. 2, no. 3, 1 juillet 1993 (1993-07-01) , pages 311-326, XP002003130, ISSN: 1057-7149, DOI: DOI:10.1109/83.236535**

**EP 2 469 868 B1**

**Description**

Le domaine de l'invention est celui des visualisations de casque comportant des dispositifs de visualisation à bas niveau de lumière utilisés dans des cockpits d'aéronefs. L'invention s'applique tout particulièrement aux hélicoptères utilisés en mission de nuit.

Un système de visualisation de nuit comporte nécessairement des capteurs ou des caméras à bas niveau de lumière et un visuel de casque porté par la tête du pilote qui affiche, en superposition sur le paysage extérieur les images issues de ces capteurs. Ces systèmes sont généralement binoculaires de façon à donner le maximum de confort visuel. Dans un certain nombre d'applications, les capteurs à bas niveau de lumière sont intégrés au casque, ce qui simplifie considérablement le système tout en réduisant au mieux les effets de parallaxe introduits par la différence de positionnement entre les capteurs et les yeux du pilote.

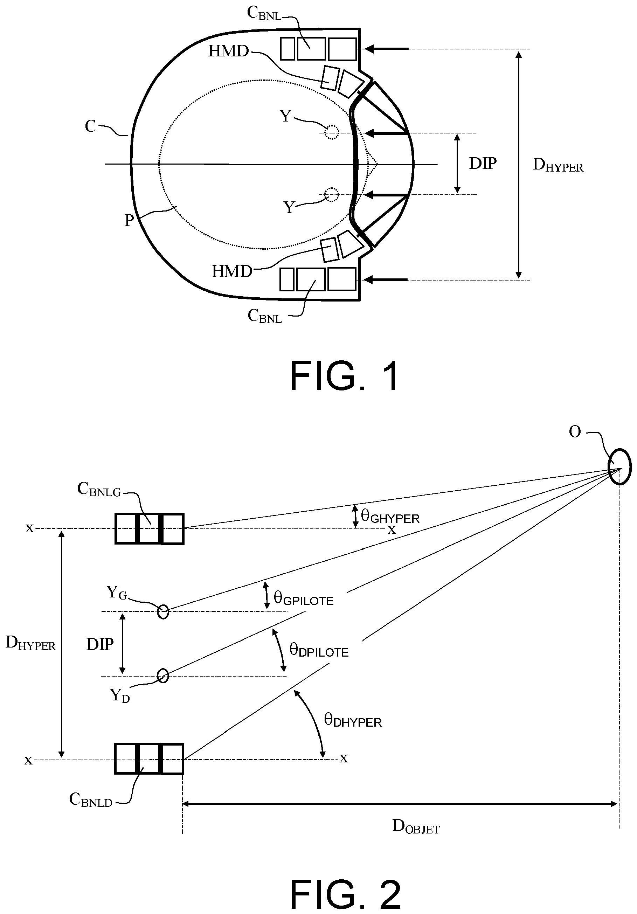

Un système de visualisation de ce type est représenté en figure 1 en situation fonctionnelle portée par la tête d'un pilote. La figure 1 est une vue de dessus. Elle comporte de façon schématique la tête du pilote P et son casque de visualisation C. La tête P comporte deux cercles Y représentatifs de la position des yeux. La coque du casque comporte deux capteurs $C_{BNL}$ dits BNL, acronyme de « Bas Niveau de Lumière » permettant de réaliser une image intensifiée du paysage extérieur. Ces capteurs sont disposés de chaque côté du casque comme on le voit sur la figure 1. A chaque capteur, est associé un visuel de casque HMD, acronyme signifiant « Helmet Mounted Display ». Les deux visuels de casque donnent deux images à l'infini des images intensifiées. Ces deux images collimatées sont perçues par les yeux du pilote. Ces deux images ont un grandissement unitaire de façon à se superposer au mieux au paysage extérieur.

On sait que la prise de vue utilisée pour obtenir une représentation naturelle d'une scène en 3D oblige à respecter une distance optimale entre la prise d'image gauche et la prise d'image droite (par exemple des systèmes connus de US6389153 ou US6111597). Cette distance correspond à l'écartement moyen des yeux gauche et droit dit distance inter-pupillaire ou DIP et qui vaut environ 65 millimètres chez l'humain adulte. Si cette distance n'est pas respectée, la représentation en 3D est faussée. Dans le cas d'un surécartement, on parle d'hyperstéréoscopie. La vision à travers un tel système dit hyperstéréoscopique donne une sous-évaluation importante des distances proches.

Les systèmes de prise de vue en 3D se développent en particulier pour le cinéma ou encore pour les systèmes de réalité virtuelle. Certaines contraintes peuvent conduire à des architectures de systèmes où l'écartement naturel des yeux n'est pas respecté entre les deux caméras lorsque, par exemple, la taille des caméras est trop importante.

Dans le cas d'un système de visualisation de casque tel que représenté en figure 1 où, comme il a été dit, les capteurs BNL sont intégrés au casque, l'écartement naturel DIP est difficile à respecter si l'on souhaite aboutir à une intégration optimale du système en terme de simplicité de réalisation, de poids et de volume. De tels systèmes, comme le système TopOwl® de la société Thales ou le système MIDASH signifiant « Modular Integrated Display And Sight Helmet » de la société Elbit, présentent alors un surécartement D très important qui est 4 à 5 fois plus important que l'écartement naturel des yeux.

Cette hyperstéréoscopie est compensée par un entraînement des pilotes qui s'accoutument à cet effet et reconstruisent leurs évaluations des distances horizontales et verticales. Néanmoins, cette hyperstéréoscopie est perçue comme gênante par les utilisateurs.

L'hyperstéréoscopie peut être minimisée en respectant les grandeurs physiologiques et en imposant un écart entre les capteurs voisins de la distance interpupillaire. Cette solution entraîne des contraintes trop importantes pour l'intégration des caméras ou des capteurs de nuit.

Il existe des traitements numériques permettant la reconstitution de scènes 3D à partir d'une caméra stéréoscopique ou d'une caméra classique en mouvement dans une scène. On citera, en particulier, la demande WO2009-118156 intitulée « Method for generating a 3D-image of a scene from a 2D-image of the scene » qui décrit ce type de traitement. Cependant, ces traitements sont effectués en temps différé, en post-traitement et sont trop lourds à implanter pour fonctionner en temps réel comme l'exigent les systèmes de visualisation de casque.

Le procédé de correction de l'hyperstéréoscopie selon l'invention consiste à reconstruire les images droites et gauches de façon à obtenir les prises de vues équivalentes à une stéréoscopie naturelle sans avoir à se positionner à l'écartement physiologique naturel de 65 mm.

Plus précisément, l'invention a pour objet un procédé de correction de l'hyperstéréoscopie dans un dispositif de visualisation de casque porté par un pilote, ledit pilote placé dans un cockpit d'aéronef, le dispositif de visualisation comprenant :

un premier ensemble binoculaire de capteurs d'images aptes à fonctionner à bas niveau de lumière et délivrant une première image intensifiée dite image gauche et une seconde image intensifiée dite image droite du paysage extérieur, les axes optiques des deux capteurs étant séparés d'une distance dite distance hyperstéréoscopique ;
un second ensemble de visualisation de casque binoculaire comprenant deux visuels de casque agencé de façon à présenter au pilote la première image intensifiée et la seconde image intensifiée, les axes optiques des deux visuels étant séparés de la distance inter-pupillaire ;
un calculateur graphique de traitement d'images ;
caractérisé en ce que le procédé de correction de l'hyperstéréoscopie est réalisé par le calculateur graphique et comprend les étapes suivantes :

Etape 1 : Décomposition de la première et de la seconde image intensifiée en de multiples éléments distincts et reconnaissables comme identiques dans les deux images ;
Etape 2 : Calcul pour chaque élément trouvé d'une distance au pilote associée et du déplacement dudit élément à effectuer dans chaque image pour revenir à une position stéréoscopique naturelle, c'est-à-dire correspondant à la distance inter-pupillaire ;
Etape 3 : Reconstruction d'une première et d'une seconde image traitée à partir des multiples éléments déplacés ;
Etape 4 : Présentation de la première image reconstruite traitée et de la seconde image reconstruite traitée dans le second ensemble de visualisation de casque binoculaire.

Avantageusement, l'étape 1 est réalisée en partie au moyen d'une cartographie point à point des deux images intensifiées permettant d'établir une carte des disparités entre les deux images.

Avantageusement, l'étape 1 est réalisée au moyen de technique d' «Image Matching » ou de « Local Matching ».

Avantageusement, l'étape 1 est réalisée en comparant une succession de premières images intensifiées à la même succession prise simultanément de secondes images intensifiées.

Avantageusement, l'étape 1 est suivie d'une étape 1bis de détourage de chaque élément.

L'invention concerne également le dispositif de visualisation de casque mettant en oeuvre le procédé précédent, ledit dispositif comprenant :

un premier ensemble binoculaire de capteurs d'images aptes à fonctionner à bas niveau de lumière et délivrant une première image intensifiée et une seconde image intensifiée,
un second ensemble de visualisation de casque binoculaire agencé de façon à présenter au pilote la première image intensifiée et la seconde image intensifiée ;
un calculateur graphique de traitement d'images ;
caractérisé en ce que le calculateur comprend les moyens électroniques et informatiques agencés de façon à mettre en oeuvre le procédé de correction de l'hyperstéréoscopie.

L'invention sera mieux comprise et d'autres avantages apparaîtront à la lecture de la description qui va suivre donnée à titre non limitatif et grâce aux figures annexées parmi lesquelles :

La figure 1 déjà décrite représente un dispositif de visualisation de casque ;
La figure 2 représente le principe du procédé de correction selon l'invention ;
La figure 3 représente les images intensifiées vues par les deux capteurs avant correction de l'hyperstéréoscopie ;
La figure 4 représente les mêmes images après traitement et correction de l'hyperstéréoscopie.

Le but du procédé selon l'invention consiste à obtenir une vision stéréoscopique naturelle à partir d'un système de prise de vue binoculaire qui est hyperstéréoscopique par construction. Cela nécessite que les images gauches et droites soient recalculées sur la base d'une analyse des différents éléments composant la scène et de l'évaluation de leurs distances. Cela nécessite également de connaître précisément les modèles du système de capteurs pour faciliter la recherche des éléments et leur recalage.

Le procédé de correction de l'hyperstéréoscopie selon l'invention repose donc sur deux principes. D'une part, il est possible de déterminer des éléments particuliers dans une image et de les déplacer au sein de cette image et d'autre part, grâce à la binocularité du système de visualisation, il est possible de déterminer la distance séparant les éléments réels du système de visualisation.

De façon plus précise, le procédé comprend les quatre étapes suivantes :

Etape 1 : Décomposition de la première et de la seconde image intensifiée en de multiples éléments distincts et reconnaissables comme identiques dans les deux images ;
Etape 2 : Calcul pour chaque élément trouvé d'une distance au pilote associée et du déplacement dudit élément à effectuer dans chaque image pour revenir à une position stéréoscopique naturelle, c'est-à-dire correspondant à la distance inter-pupillaire ;
Etape 3 : Reconstruction d'une première et d'une seconde image traitée à partir des multiples éléments déplacés ;
Etape 4 : Présentation de la première image reconstruite traitée et de la seconde image reconstruite traitée dans le second ensemble de visualisation de casque binoculaire.

Ces étapes sont détaillées ci-dessous.

**Etape 1 : Recherche des éléments**

Il existe actuellement de nombreux traitements graphiques permettant d'effectuer la recherche d'éléments particuliers ou d'objets dans une image. On citera, en particulier, les méthodes de recherche de disparité ou de « matching ». Dans le cas présent, ces techniques sont facilitées dans la mesure où les images fournies par les capteurs gauche et droit sont nécessairement très voisines. On doit donc identifier sensiblement les mêmes éléments dans chaque image. Tous les calculs qui suivent sont effectués sans difficultés par un calculateur graphique en temps réel.

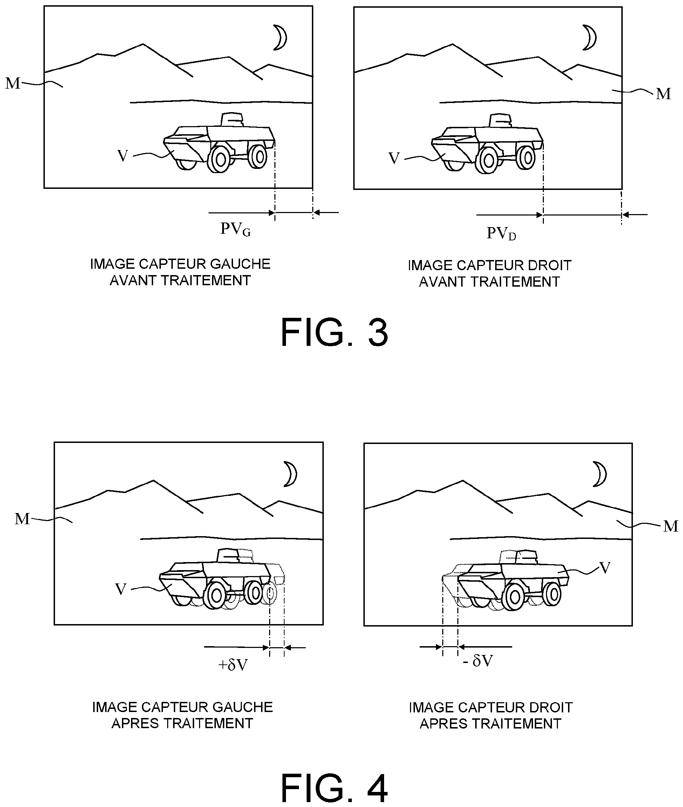

La méthode de recherche de disparité permet d'établir une cartographie des différences point à point ou pixel par pixel corrigées par le modèle de capteurs du système binoculaire. Ce modèle est défini, par exemple, par une cartographie des gains, par un offset, des décalages de positionnement angulaire, la distorsion des optiques,.... Cette cartographie des disparités permet, en conservant les points dont la différence d'intensité ou de niveau est supérieure à un seuil prédéfini, d'identifier simplement les zones contenant les éléments « non lointains » de la scène encore appelée « Background ». Cette utilisation est également intéressante en cartographie dite « basse fréquence » ou BF. A titre d'exemple, les deux vues de la figure 3 représentent une scène de nuit vues par des capteurs gauche et droit. Sur ces vues, on trouve en arrière-plan un paysage de montagne M et au premier plan un véhicule V. Comme on le voit sur ces vues, les positions $PV_G$ et $PV_D$ du véhicule V sur les images gauche et droite sont différentes. Cette différence est liée à l'effet hyperstéréoscopique.

On utilise les méthodes dites de « matching » ou d'appariements sur les zones identifiés soit par corrélation de voisinages ou recherche et « matching » de points d'intérêts en utilisant des descripteurs adaptés, soit par analyse de contours de scène et « matching » de contours. Cette dernière méthode présente l'intérêt de simplifier l'étape suivante, les contours étant déjà détourés. Cette phase d'analyse est simplifiée par la direction fixe du mouvement à identifier, sur l'axe des pupilles des capteurs, donnant un axe de recherche pour l'appariement des points et des zones.

On peut également réaliser des cartographies de mouvement entre les deux capteurs dans la mesure où l'aéronef est nécessairement mobile. On réalise alors une estimation de mouvement du type « compensation de flux optique ». Cette analyse est également simplifiée par la direction fixe du mouvement à identifier, sur l'axe des pupilles des capteurs et des yeux.

Il est intéressant d'effectuer un détourage précis des éléments trouvés de manière à mieux estimer leurs distances aux capteurs de prise de vue. Ce détourage précis sert de plus fortement dans la phase 3 de reconstruction de l'image de manière à effectuer un déplacement le plus propre possible de cet élément dans les images résultantes.

**Etape 2 : Calcul des distances et des déplacements**

Une fois les différents éléments de la scène identifiés et appariés deux à deux entre les images des capteurs droite et gauche, il est possible d'estimer assez finement la distance D associée à chacun de ces éléments par le décalage latéral en pixels sur les deux images et le modèle du système de capteurs. La figure 2 illustre le principe de calcul.

Pour simplifier la démonstration, le calcul est fait dans un plan contenant les axes xx des capteurs. La figure est faite à roulis nul pour la tête du pilote. En cas de roulis, l'ensemble des capteurs et les yeux basculent du même angle et l'on peut se ramener, par un simple changement de repère, à une configuration où la tête est à roulis nul et où la scène a tourné. Le roulis n'affecte donc pas les calculs.

Ce calcul est également fait dans l'espace réel de l'objet. Dans cet espace, un objet ou un élément O est vu par le premier capteur gauche $C_{BNLG}$ sous un angle $\theta_{GHYPEP}$ et le même objet O est vu par le second capteur droit $C_{BNLD}$ sous un angle $\theta_{DHYPEP}$. On détermine très facilement ces angles en connaissant les positions de l'objet O dans l'image et les focales des optiques de focalisation disposées devant les capteurs. Connaissant ces deux angles $\theta_{GHYPER}$, $\theta_{DHYPER}$ et la distance $D_{HYPER}$ séparant les axes optiques des capteurs, on calcule facilement la distance $D_{OBJET}$ de l'objet au système par l'équation simple :

$$D_{OBJET} = D_{HYPER}/(tg\theta_{GHYPER} - tg\theta_{DHYPER})$$

Connaissant cette distance $D_{OBJET}$, il est alors facile de recalculer les angles sous lesquels cet objet serait vu par les deux yeux du pilote, les yeux étant séparés d'une distance interpupillaire ou DIP qui vaut généralement autour de 65 millimètres. On obtient les angles $\theta_{DPILOTE}$ et $\theta_{GPILOTE}$ par les formules :

$$tg\,\theta_{GPILOTE} = tg\,\theta_{GHYPER} + (D_{HYPER} - DIP)/2D_{OBJET}$$

$$tg\,\theta_{DPILOTE} = tg\,\theta_{DHYPER} - (D_{HYPER} - DIP)/2D_{OBJET}$$

Le terme $(D_{HYPER} - DIP)/2D_{OBJET}$ correspond aux déplacements angulaires à effectuer sur les images de l'objet O dans les images gauche et droites de façon à correspondre à une vision naturelle stéréoscopique. Ces déplacements sont égaux et de sens opposé. On convertit facilement ces valeurs angulaires de l'espace réel en déplacements de position de l'objet O dans les images gauche et droite.

**Etape 3 : Reconstruction des images stéréoscopiques**

Cette reconstruction se fait par le calcul des images droite et gauche corrigées. Ce calcul est basé sur les images droite et gauche acquises avec l'hyperstéréoscopie du système, les éléments reconnus dans ses images et les déplacements calculés à effectuer sur ces éléments. La phase de reconstruction consiste à supprimer les éléments reconnus de la scène et à les repositionner suivant le décalage angulaire calculé par incrustation. Les deux images gauche et droite permettent de retrouver les contenus de l'image masqués par l'objet présent sur chaque image. La mémoire image gauche permet la reconstruction des informations manquantes dans l'image de droite et inversement. A titre d'exemple simple, la figure 4 représente les images gauche et droite corrigées correspondant à celles de la figure 3. Le véhicule V a été déplacé de + δV sur l'image gauche et de -δV sur l'image droite. Les parties en pointillés représentent les parties manquantes dans l'image et qui ont dû être complétées.

Dans cette phase, il est possible de corriger les différences de projection par homomorphisme. Il est intéressant d'avoir un modèle précis des caractéristiques des capteurs pour réaliser cette étape. Des zones non couvertes par les prises de vues peuvent malgré tout subsister. Celles-ci peuvent être remplies par un fond neutre correspondant à un gris moyen sur des images en noir et blanc. La vision de ces zones devient monoculaire sans perturber l'observation.

Dans le cas d'une utilisation pour un système viseur de casque où les capteurs sont intégrés au casque, le système peut avantageusement permettre d'optimiser les traitements d'amélioration et/ou de filtrage d'image.

Les images ainsi reconstruites donnent une vision naturelle quel que soit l'écartement entre les deux prises de vues.

La qualité de la reconstruction dépend fortement de la finesse du détourage de l'objet. Les artefacts résiduels sont estompés par une compensation de différence ou moyennage spatial lors de la fusion des deux zones images.

La parallélisation des calculs effectués par le calculateur graphique sur les images gauche et droite et l'organisation de la mémoire image en accès partagé permet d'optimiser le temps de calcul. L'ensemble des traitements est fait en temps réel pour permettre un affichage d'un flux vidéo corrigé sans latence, c'est-à-dire avec un retard d'affichage inférieur au temps d'affichage d'une trame. Ce temps est, par exemple, de 20 ms pour une fréquence d'affichage trame de 50 hertz.

**Etape 4 : Présentation des images stéréoscopiques**

Les images ainsi reconstruites sont ensuite affichées dans les visuels de casque. Il est, bien entendu, possible, d'incorporer aux images reconstruites une image synthétique donnant, par exemple, des informations sur le pilotage ou d'autres systèmes de l'aéronef. Cette image peut être ou non stéréoscopique, c'est-à-dire être identique sur les deux visuels de casque gauche et droit ou différente de façon à être vue à distance finie.

**Revendications**

**1.** Procédé de correction de l'hyperstéréoscopie dans un dispositif de visualisation de casque porté par un pilote, ledit pilote placé dans un cockpit d'aéronef, le dispositif de visualisation comprenant :

un premier ensemble binoculaire de capteurs d'images (C_BNL) aptes à fonctionner à bas niveau de lumière et délivrant une première image intensifiée et une seconde image intensifiée du paysage extérieur, les axes optiques des deux capteurs étant séparés d'une distance dite distance hyperstéréoscopique (D_HYPER);
un second ensemble de visualisation de casque binoculaire comprenant deux visuels de casque (HMD) agencé de façon à présenter au pilote la première image intensifiée et la seconde image intensifiée, les axes optiques des deux visuels étant séparés de la distance inter-pupillaire (DIP) ;

un calculateur graphique de traitement d'images ;

**caractérisé en ce que** le procédé de correction de l'hyperstéréoscopie est réalisé par le calculateur graphique et comprend les étapes suivantes :

Etape 1 : Décomposition de la première et de la seconde image intensifiée en de multiples éléments distincts et reconnaissables comme identiques dans les deux images ;

Etape 2 : Calcul pour chaque élément trouvé d'une distance ($D_{OBJET}$) au pilote associée et du déplacement ($\delta V$) dudit élément à effectuer dans chaque image pour revenir à une position stéréoscopique naturelle, c'est-à-dire correspondant à la distance inter-pupillaire ;

Etape 3 : Reconstruction d'une première et d'une seconde image traitée à partir des multiples éléments déplacés ;

Etape 4 : Présentation de la première image reconstruite traitée et de la seconde image reconstruite traitée dans le second ensemble de visualisation de casque binoculaire.

2. Procédé de correction de l'hyperstéréoscopie selon la revendication 1, **caractérisé en ce que** l'étape 1 est réalisée en partie au moyen d'une cartographie point à point des deux images intensifiées permettant d'établir une carte des disparités entre les deux images.

3. Procédé de correction de l'hyperstéréoscopie selon la revendication 1, **caractérisé en ce que** l'étape 1 est réalisée au moyen de technique d' «Image Matching » ou de « Local Matching ».

4. Procédé de correction de l'hyperstéréoscopie selon la revendication 1, **caractérisé en ce que** l'étape 1 est réalisée en comparant une succession de premières images intensifiées à la même succession prise simultanément de secondes images intensifiées.

5. Procédé de correction de l'hyperstéréoscopie selon la revendication 1, **caractérisé en ce que** l'étape 1 est suivie d'une étape 1 bis de détourage.de chaque élément.

6. Dispositif de visualisation de casque comprenant :

un premier ensemble binoculaire de capteurs d'images ($C_{BNL}$) aptes à fonctionner à bas niveau de lumière et délivrant une première image intensifiée et une seconde image intensifiée,

un second ensemble de visualisation (HMD) de casque binoculaire agencé de façon à présenter au pilote la première image intensifiée et la seconde image intensifiée ;

un calculateur graphique de traitement d'images ;

**caractérisé en ce que** le calculateur comprend les moyens électroniques et informatiques agencés de façon à mettre en oeuvre le procédé de correction de l'hyperstéréoscopie selon l'une des revendications précédentes.

**Patentansprüche**

1. Verfahren zur Korrektur der Hyperstereoskopie in einer Visualisierungsvorrichtung eines von einem Piloten getragenen Helms, wobei der Pilot in einem Flugzeug-Cockpit platziert ist, wobei die Visualisierungsvorrichtung Folgendes beinhaltet:

eine erste Binokulargruppe von Bildsensoren ($C_{BNL}$), welche in der Lage sind, mit schwacher Helligkeit zu arbeiten und ein erstes intensiviertes Bild und ein zweites intensiviertes Bild der äußeren Landschaft abzugeben, wobei die optischen Achsen der beiden Sensoren um einen Abstand voneinander getrennt sind, genannt hyperstereoskopischer ($D_{HYPER}$) Abstand;

eine zweite Binokular-Helm-Visualisierungsgruppe, welche zwei Helmanzeigen (HMD) beinhaltet, welche so gestaltet ist, dass sie dem Piloten das erste intensivierte Bild und das zweite intensivierte Bild präsentieren, wobei die optischen Achsen der beiden Anzeigen um die Pupillendistanz (DIP) voneinander getrennt sind;

einen grafischen Rechner zur Verarbeitung von Bildern;

**dadurch gekennzeichnet, dass** das Verfahren zur Korrektur der Hyperstereoskopie durch den grafischen Rechner durchgeführt wird und folgende Schritte beinhaltet:

Schritt 1: Zerlegen des ersten und des zweiten intensivierten Bildes in multiple unterschiedliche und als in beiden Bildern identisch erkennbare Elemente;

Schritt 2: Berechnen, für jedes gefundene Element, der dazugehörigen Distanz ($D_{OBJEKT}$) zum Piloten und der Bewegung ($\delta V$) des Elementes, welche in jedem Bild bewerkstelligt werden muss, um zu einer natürlichen stereoskopischen Position zurück zu gelangen, das heißt einer Position, welche der Pupillendistanz entspricht;

Schritt 3: Rekonstruieren eines ersten und eines zweiten verarbeiteten Bildes, anhand der multiplen verlegten Elemente;

Schritt 4: Präsentieren des ersten rekonstruierten, verarbeiteten Bildes und des zweiten rekonstruierten, verarbeiteten Bildes in der zweiten Binokular-Helm-Visualisierungsgruppe.

2. Verfahren zur Korrektur der Hyperstereoskopie nach Anspruch 1, **dadurch gekennzeichnet, dass** der Schritt 1 teilweise mit Hilfe einer Punkt-zu-Punkt-Kartierung der beiden intensivierten Bilder erfolgt, welche es ermöglicht, eine Karte der Unterschiede zwischen den beiden Bildern zu erstellen.

3. Verfahren zur Korrektur der Hyperstereoskopie nach Anspruch 1, **dadurch gekennzeichnet, dass** der Schritt 1 mit Hilfe der Technik des "Image Matching" oder des "Local Matching" bewerkstelligt wird.

4. Verfahren zur Korrektur der Hyperstereoskopie nach Anspruch 1, **dadurch gekennzeichnet, dass** der Schritt 1 durch Vergleichen einer Abfolge von ersten intensivierten Bildern mit derselben gleichzeitig aufgenommenen Abfolge von zweiten intensivierten Bildern erfolgt.

5. Verfahren zur Korrektur der Hyperstereoskopie nach Anspruch 1, **dadurch gekennzeichnet, dass** auf Schritt 1 der Schritt 1bis der Konturausschneidung eines jeden Elements folgt.

6. Helm-Visualisierungsvorrichtung, Folgendes beinhaltend:

eine erste Binokulargruppe von Bildsensoren ($C_{BNL}$), welche in der Lage sind, mit schwacher Helligkeit zu arbeiten und ein erstes intensiviertes Bild und ein zweites intensiviertes Bild abzugeben,

eine zweite Binokular-Helm-Visualisierungsgruppe (HMD), welche so angeordnet ist, dass sie dem Piloten das erste intensivierte Bild und das zweite intensivierte Bild präsentiert;

einen grafischen Rechner zur Verarbeitung von Bildern;

**dadurch gekennzeichnet, dass** der Rechner elektronische und EDV-Mittel umfasst, welche so angeordnet sind, dass sie das Verfahren zur Korrektur der Hyperstereoskopie nach einem der vorhergehenden Ansprüche umsetzen.

**Claims**

1. Method for correcting hyperstereoscopy in a helmet viewing device worn by a pilot, the pilot being placed in an aircraft cockpit, the viewing device comprising:

a first binocular assembly of image sensors ($C_{BNL}$) able to operate at low light level and supplying a first intensified image and a second intensified image of the exterior landscape, the optical axes of the two sensors being separated by a distance termed the hyperstereoscopic distance ($D_{HYPER}$);

a second binocular helmet viewing assembly which comprises two helmet mounted displays (HMD) and which is arranged so as to present the first intensified image and the second intensified image to the pilot, the optical axes of the two displays being separated by the inter-pupillary distance (DIP);

a graphical calculator for image processing;

**characterised in that** the method for correcting hyperstereoscopy is carried out by the graphical calculator and comprises the following steps:

Step 1: Decomposition of the first and of the second intensified image into multiple distinct elements recognisable as being identical in the two images;

Step 2: Calculation for each element found of an associated distance ($D_{OBJET}$) from the pilot and of the displacement ($\delta V$) of the element to be performed in each image so as to return to a natural stereoscopic position, that is to say, corresponding to the inter-pupillary distance;

Step 3: Reconstruction of a first and of a second processed image on the basis of the multiple displaced elements;

Step 4: Presentation of the first processed reconstructed image and of the second processed reconstructed image in the second binocular helmet viewing assembly.

2. Method for correcting hyperstereoscopy according to claim 1, **characterised in that** step 1 is carried out in part by means of a point-to-point mapping of the two intensified images making it possible to establish a map of the disparities between the two images.

3. Method for correcting hyperstereoscopy according to claim 1, **characterised in that** step 1 is carried out by means of a technique of "Image Matching" or of "Local Matching".

4. Method for correcting hyperstereoscopy according to claim 1, **characterised in that** step 1 is carried out by comparing a succession of first intensified images with the same simultaneously captured succession of second intensified images.

5. Method for correcting hyperstereoscopy according to claim 1, **characterised in that** step 1 is followed by a step 1bis of cropping each element.

6. Helmet viewing device comprising:

a first binocular assembly of image sensors ($C_{BNL}$) able to operate at low light level and supplying a first intensified image and a second intensified image,
a second binocular helmet viewing assembly (HMD) arranged so as to present the first intensified image and the second intensified image to the pilot;
a graphical calculator for image processing;
**characterised in that** the calculator comprises the electronic and data-processing means arranged so as to implement the method for correcting hyperstereoscopy according to any one of the preceding claims.

# FIG. 1

# FIG. 2

IMAGE CAPTEUR GAUCHE
AVANT TRAITEMENT

IMAGE CAPTEUR DROIT
AVANT TRAITEMENT

# FIG. 3

IMAGE CAPTEUR GAUCHE
APRES TRAITEMENT

IMAGE CAPTEUR DROIT
APRES TRAITEMENT

# FIG. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6389153 B
- US 6111597 A
- WO 2009118156 A